# EUROPEAN PATENT APPLICATION

(11) **EP 4 535 274 A1**
(43) Date of publication of application: **09.04.2025**
(21) Application number: 23835249.6
(22) Date of filing: 14.06.2023
(51) Int. Cl.: G06Q 50/04

(54) **MANUFACTURING PLAN GENERATION SYSTEM, MANUFACTURING PLAN GENERATION METHOD, AND MANUFACTURING SYSTEM**

(30) Priority: 06.07.2022 JP 2022108867
(71) Applicant: ENEOS Corporation, Chiyoda-ku Tokyo 100-8162 (JP)
(72) Inventor: MAEDA Seiji, Tokyo 100-8162 (JP); NAKAGAWA Kojiro, Tokyo 100-8162 (JP); TAKAHASHI Yutaro, Tokyo 100-8162 (JP)
(74) Representative: Grünecker Patent- und Rechtsanwälte PartG mbB
(86) International application number: PCT/JP2023/022128
(87) International publication number: WO 2024/009714

(57) **Abstract**

A production cost of fuel provided to a vehicle is reduced.

A production plan generation system 10 generates a production plan for fuel or a vehicle and includes a condition information acquisition unit 11 acquiring condition information including information indicating an amount of fuel suppliable to a vehicle to which a produced fuel can be supplied and a production plan generation unit 12 generating the production plan including a production time of the fuel and an amount of fuel produced on the basis of the condition information acquired by the condition information acquisition unit 11.

## Description

### Technical Field

The present invention relates to a production plan generation system, a production plan generation method, and a production system that generate a production plan for fuel for a vehicle.

### Background Art

Hydrogen supplied as fuel to an FC (Fuel Cell) mobility, such as a fuel cell vehicle, is produced, for example, by a hydrogen production facility that performs water electrolysis. In the related art, a technique has been proposed that produces hydrogen during a time period for which a power price is low in order to reduce a production cost of hydrogen (see, for example, Patent Literature 1). The produced hydrogen is stored in a pressure accumulator and is supplied to the FC mobility when needed.

### Citation List

### Patent Literature

Patent Literature 1: International Publication WO 2020/196889

### Summary of Invention

### Technical Problem

However, when hydrogen is produced under the above-described conditions, an upper limit of the amount of fuel produced is determined by the capacity of the pressure accumulator. Therefore, it is not necessarily possible to sufficiently reduce the production cost of hydrogen.

An embodiment of the present invention has been made in view of the above circumstances, and an object of the embodiment of the present invention to provide a production plan generation system, a production plan generation method, and a production system that can reduce a production cost of fuel provided to a vehicle.

### Solution to Problem

In order to achieve the object, according to an embodiment of the present invention, there is provided a production plan generation system for generating a production plan for fuel for a vehicle. The production plan generation system includes: a condition information acquisition unit acquiring condition information including information indicating an amount of fuel suppliable to a vehicle to which a produced fuel can be supplied; and a production plan generation unit generating the production plan including a production time of the fuel and an amount of fuel produced on the basis of the condition information acquired by the condition information acquisition unit.

In the production plan generation system according to the embodiment of the present invention, the production plan is generated on the basis of the condition information including the information indicating the amount of fuel suppliable. Therefore, it is possible to generate the production plan considering the supply of the fuel to the vehicle. As a result, it is possible to reduce the production cost of the fuel provided to the vehicle.

The production plan generation unit may set an upper limit of the amount of fuel produced on the basis of the condition information acquired by the condition information acquisition unit and generate the production plan. According to this configuration, the upper limit of the amount of fuel produced is set on the basis of the condition information including the information indicating the amount of fuel suppliable, and the production plan is generated. As a result, it is possible to more appropriately and reliably reduce the production cost of the fuel provided to the vehicle.

The condition information acquisition unit may acquire the condition information including information indicating an amount of fuel storable in a storage device that is other than the vehicle and can store the produced fuel. According to this configuration, it is possible to generate the production plan considering the storage of fuel in the storage device, in addition to the supply of the fuel to the vehicle. As a result, it is possible to reduce the production cost of the fuel provided to the vehicle.

The production plan generation unit may acquire information indicating a production cost of the fuel for each time and generate the production plan also on the basis of the production cost. According to this configuration, it is possible to appropriately and reliably generate the production plan that reduces the production cost of the fuel.

The produced fuel may be hydrogen, and the production cost of the fuel may include a power price. According to this configuration, it is possible to appropriately and reliably generate the production plan for hydrogen as the fuel.

The production plan generation system may further include a vehicle management unit managing an available state of the vehicle according to a supply of the fuel generated on the basis of the production plan generated by the production plan generation unit to the vehicle. According to this configuration, it is possible to appropriately manage the vehicle according to the generated production plan.

The vehicle management unit may determine whether or not there is an available vehicle on the basis of a remaining capacity of a fuel tank of the vehicle corresponding to the supply of the fuel generated on the basis of the production plan generated by the production plan generation unit to the vehicle. According to this configuration, it is possible to more appropriately manage the vehicle.

When it is determined that there is no available vehicle and a storage amount of the generated fuel does not satisfy a condition related to the supply of the fuel to a vehicle used by a predetermined user, the vehicle management unit may add a new constraint related to the supply of the fuel to the vehicle used by the predetermined user and instruct the production plan generation unit to generate a new production plan. According to this configuration, it is possible to generate an appropriate production plan corresponding to the available state of the vehicle.

The vehicle may be a leased vehicle. According to this configuration, it is possible to more appropriately and reliably reduce the production cost of the fuel provided to the leased vehicle.

The condition information acquisition unit may acquire information, which indicates a remaining capacity of a fuel tank of the vehicle and is transmitted from the vehicle when the vehicle enters a predetermined parking place, as the information indicating the amount of fuel suppliable to the vehicle. According to this configuration, it is possible to appropriately and reliably acquire information used for generating the production plan. As a result, it is possible to more appropriately and reliably reduce the production cost of the fuel provided to the vehicle.

The condition information acquisition unit may acquire information indicating a fuel production capacity of a production device producing the fuel for the vehicle, and the production plan generation unit may generate the production plan also on the basis of the information indicating the fuel production capacity of the production device acquired by the condition information acquisition unit. According to this configuration, it is possible to generate an appropriate production plan that also corresponds to the fuel production capacity of the production device.

However, the embodiment of the present invention can be described not only as an invention of the production plan generation system as described above, but also as an invention of a production plan generation method as described below. These are just different in categories, but are substantially the same inventions. Therefore, these have similar functions and effects.

That is, according to an embodiment of the present invention, there is provided a production plan generation method which is a method for operating a production plan generation system generating a production plan for fuel for a vehicle. The production plan generation method includes: a condition information acquisition step of acquiring condition information including information indicating an amount of fuel suppliable to a vehicle to which a produced fuel can be supplied; and a production plan generation step of generating the production plan including a production time of the fuel and an amount of fuel produced on the basis of the condition information acquired in the condition information acquisition step.

According to an embodiment of the present invention, there is provided a production system including: a production plan generation system; and a production device producing fuel according to a production plan generated by the production plan generation system. The production plan generation system generates the production plan for fuel for a vehicle and includes a condition information acquisition unit acquiring condition information including information indicating an amount of fuel suppliable to a vehicle to which a produced fuel can be supplied and a production plan generation unit generating the production plan including a production time of the fuel and an amount of fuel produced on the basis of the condition information acquired by the condition information acquisition unit.

### Advantageous Effects of Invention

According to an embodiment of the present invention, it is possible to generate a production plan considering the supply of fuel to a vehicle. As a result, it is possible to reduce the production cost of the fuel provided to the vehicle.

### Brief Description of Drawings

FIG. 1 is a diagram showing a configuration of a production plan generation system according to an embodiment of the present invention.
FIG. 2 is a graph showing an example of a power price and hydrogen demand for each time.
FIG. 3 is a flowchart showing a production plan generation method which is a process executed by the production plan generation system according to the embodiment of the present invention.
FIG. 4 is a view showing an example of effects of the embodiment of the present invention.

### Description of Embodiments

Hereinafter, an embodiment of a production plan generation system, a production plan generation method, and a production system according to the present invention will be described in detail with reference to the drawings. In addition, in the description of the drawings, the same elements are denoted by the same reference numerals, and a duplicate description thereof will be omitted.

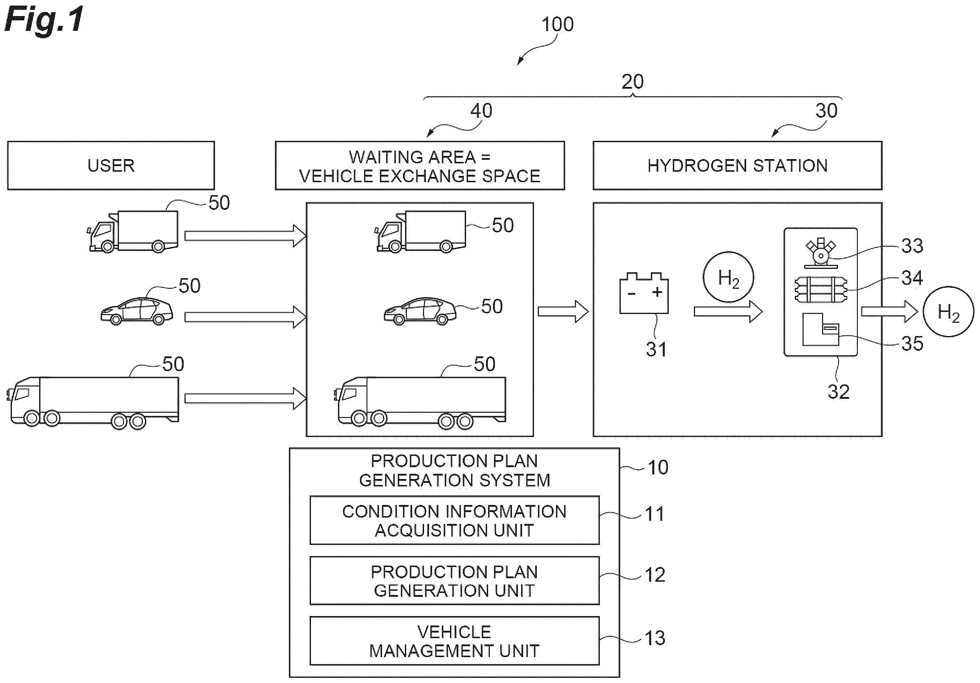

FIG. 1 shows a production plan generation system 10 according to this embodiment. The production plan generation system 10 is a system (device) that generates a production plan for fuel for a vehicle. In this embodiment, a vehicle is an FC mobility such as a fuel cell vehicle, and the fuel for the vehicle is hydrogen (H₂). However, the production plan generation system 10 may generate a production plan for fuel other than hydrogen. The production plan for hydrogen includes the time when hydrogen is produced and the amount of hydrogen produced for each time. For example, the production plan for hydrogen indicates the amount of hydrogen produced every 30 minutes. The production plan generation system 10 generates the production plan so as to satisfy production conditions which will be described below. In addition, the production plan generation system 10 generates the production plan considering a production cost of hydrogen for each time when hydrogen is produced.

Specifically, the production plan generation system 10 is a PC (personal computer), a server device, or the like which is a computer including hardware such as a CPU (Central Processing Unit) and memory. These components are operated by a program or the like to implement the functions of the production plan generation system 10 which will be described below. In addition, the production plan generation system 10 may be implemented by one computer or may be implemented by a computer system configured by connecting a plurality of computers via a network. Further, the production plan generation system 10 may have a communication function of transmitting and receiving information to and from other devices as necessary.

The production plan generation system 10 generates, for example, a production plan for hydrogen to be produced in a facility 20 shown in FIG. 1. The facility 20 includes a hydrogen station 30 and a waiting area 40. The facility 20 is used to lease an FC mobility 50 to a user. The production plan generation system 10 may be provided by an operator (business operator) that leases the FC mobility 50. In other words, the FC mobility 50 is a leased vehicle.

The waiting area 40 is a place in which the FC mobility 50 can be parked. The FC mobility 50 to be leased is parked in the waiting area 40, and the user can lease the FC mobility 50 to be leased which is parked in the waiting area 40.

The hydrogen station 30 is a place (facility) in which hydrogen, which is fuel for the FC mobility 50, is produced and the FC mobility 50 is filled (supplied) with the produced hydrogen. The hydrogen station 30 is provided with a hydrogen production facility 31 and a hydrogen supply equipment 32. The hydrogen supply equipment 32 includes a compressor 33, a pressure accumulator 34, and a dispenser 35.

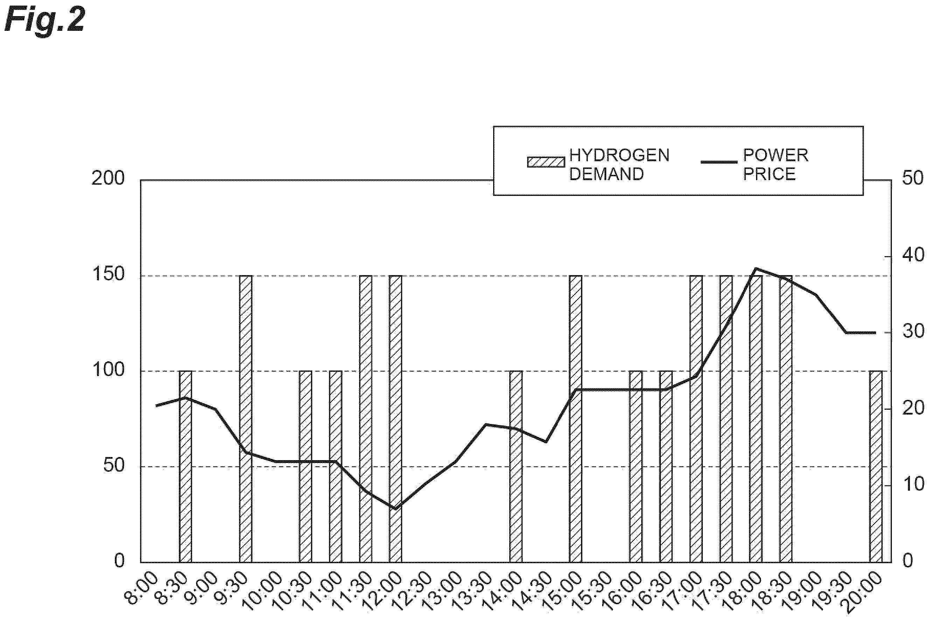

The hydrogen production facility 31 is a device that performs water electrolysis to produce hydrogen. The production of the hydrogen by the hydrogen production facility 31 is performed according to the production plan generated by the production plan generation system 10. The production of the hydrogen by the hydrogen production facility 31 is performed using, for example, commercial power. As shown in FIG. 2, the price of the commercial power (price per unit power) varies depending on time. The power price figures are figures (yen) shown on the left side of a graph. Therefore, the production cost of varies depending on time.

Instead of or in addition to the commercial power, power other than the commercial power may be used as the power used by the hydrogen production facility 31 to produce hydrogen. The power other than the commercial power is, for example, power obtained by solar power generation or wind power generation using a proprietary device. These devices may be provided on the premises of the hydrogen production facility 31 or on nearby premises.

The hydrogen supply equipment 32 is a device that supplies the hydrogen produced by the hydrogen production facility 31 to the FC mobility 50. The compressor 33 included in the hydrogen supply equipment 32 is a device that pressurizes the hydrogen produced by the hydrogen production facility 31. The pressure accumulator 34 is a storage device that stores the hydrogen produced by the hydrogen production facility 31. The pressure accumulator 34 stores the hydrogen pressurized by the compressor 33. The dispenser 35 is a device that supplies the hydrogen stored in the pressure accumulator 34 to the FC mobility 50 while controlling a flow rate and pressure. The devices according to the related art may be used as the hydrogen production facility 31, and the compressor 33, the pressure accumulator 34, and the dispenser 35 included in the hydrogen supply equipment 32. In addition, a device other than the pressure accumulator 34 may be used as the storage device for storing the hydrogen.

The FC mobility 50 to be leased which is parked in the waiting area 40 is filled with hydrogen in advance at the hydrogen station 30. In this embodiment, the filling of the FC mobility 50 with hydrogen is performed from the pressure accumulator 34 through the dispenser 35. However, the filling of the FC mobility 50 with hydrogen does not need to be performed from the pressure accumulator 34, but may be performed from the hydrogen production facility 31 through the compressor 33 and the dispenser 35 without the hydrogen being stored in the pressure accumulator 34 (this filling is called direct filling). The work of filling the FC mobility 50 with hydrogen is performed, for example, by the operator who leases the FC mobility 50. The hydrogen station 30 and the waiting area 40 may be provided in the same place or in separate places. In a case where the hydrogen station 30 and the waiting area 40 are provided in separate places, the FC mobility 50 is moved to the hydrogen station 30 when the work of filling the FC mobility 50 with hydrogen is performed.

The user can bring the FC Mobility 50, in which the filled hydrogen has been reduced by use after lease, into the waiting area 40 and switch to another FC Mobility 50 that has been filled with hydrogen and parked in the waiting area 40 at that time. Since the FC mobility 50 is leased in this manner, the user can use the FC mobility 50 without filling the FC mobility 50 with hydrogen on their own. The FC mobility 50 is leased, for example, on a monthly basis including a pay-per-use basis.

The FC mobility 50 to be leased may include a plurality of types of FC mobilities 50. For example, the vehicle types are a passenger car, a bus, and a truck.

The production plan generation system 10 has a function of managing the FC mobility 50, which will be described below. In addition, the production plan generation system 10 may not be necessarily based on the above-mentioned facility 20 and businesses.

A production system 100 according to this embodiment includes the production plan generation system 10 and the hydrogen production facility 31. In addition, the production system 100 may include the above-described configurations other than the production plan generation system 10 and the hydrogen production facility 31.

Next, the functions of the production plan generation system 10 according to this embodiment will be described. As shown in FIG. 1, the production plan generation system 10 includes a condition information acquisition unit 11, a production plan generation unit 12, and a vehicle management unit 13.

The condition information acquisition unit 11 is a functional unit that acquires condition information including information indicating an amount of fuel that can be supplied to a vehicle to which a produced fuel can be supplied. The condition information acquisition unit 11 may acquire condition information also including information indicating an amount of fuel that can be stored in a storage device that is other than the vehicle and can store the produced fuel. The condition information acquisition unit 11 may acquire information, which indicates a remaining capacity of a fuel tank of the vehicle and is transmitted from the vehicle when the vehicle enters a predetermined parking place, as the information indicating the amount of fuel that can be supplied to the vehicle. The condition information acquisition unit 11 may acquire information indicating a fuel production capacity of a production device that produces fuel for vehicles.

The condition information is information indicating constraint conditions when the hydrogen production facility 31 produces hydrogen. The hydrogen produced by the hydrogen production facility 31 needs to be stored in some kind of device. Therefore, the amount of hydrogen that can be stored is one of the above-described conditions. In this embodiment, the produced hydrogen can also be stored (filled) in the fuel tank of the FC mobility 50 through the pressure accumulator 34. The capacity of the pressure accumulator 34 depends on the scale of the hydrogen station and the like and is, for example, about 700 Nm3. The capacity of the fuel tank of the FC mobility 50 is, for example, about 60 Nm3 when the vehicle is a normal passenger car and is about 270 Nm3 when the vehicle is a bus. The condition information acquisition unit 11 acquires, as the condition information, information indicating the amount of hydrogen that can be supplied (that can be filled into) to the FC mobility 50 parked in the waiting area 40.

For the FC mobility 50 that can be parked in the waiting area 40, that is, the FC mobility 50 to be leased, a vehicle number, which is information for identifying the FC mobility 50, is set in advance for each FC mobility 50. The production plan generation system 10 may be configured to specify a vehicle type from the vehicle number. Each FC mobility 50 is provided with a system that can detect the remaining capacity (for example, information in kg) of the fuel tank of the FC mobility 50. When the FC mobility 50 enters the waiting area 40, the system transmits information indicating the vehicle number and the remaining capacity of the fuel tank to the production plan generation system 10.

The production plan generation system 10 stores information related to the FC mobility 50 parked in the waiting area 40 in a database or the like. The information is used for the production plan for hydrogen and the lease of the FC mobility 50. The information is, for example, information in which the vehicle number of each FC mobility 50, information indicating whether or not the fuel tank has been (fully) filled with hydrogen, and information indicating the remaining capacity of the fuel tank have been associated with one another. The remaining capacity of the fuel tank of the FC mobility 50 parked in the waiting area 40 is the amount of hydrogen that can be supplied to the FC mobility 50 (the amount of hydrogen that can be filled into the FC mobility 50).

The production plan generation system 10 receives the information indicating the vehicle number and the remaining capacity of the fuel tank transmitted from the entered FC mobility 50 and stores the information in the database. For the information indicating whether or not the fuel tank has been (fully) filled with hydrogen, when the remaining capacity of the fuel tank is zero, it is determined that the fuel tank has been filled. When the remaining capacity of the fuel tank is not zero, it is determined that the fuel tank has not been filled.

Further, in general, the filling of the fuel tank of the FC mobility 50 with hydrogen is not performed until the fuel tank is filled to the capacity (theoretical value) of the fuel tank. When the FC mobility 50 is filled with high-pressure hydrogen at the hydrogen station 30, the filled hydrogen generates heat. There are not only pressure limits but also temperature limits on the fuel tank of the FC Mobility 50. Hydrogen gas to be filled is cooled so as not to exceed the limits, and a filling speed of the hydrogen gas is adjusted to prevent the fuel tank from overheating when filling is complete. In actual filling, a target value of the amount of hydrogen to be filled is set, considering the outside air temperature (which is used instead of the temperature of the fuel tank of the FC mobility 50), the temperature of the cooled hydrogen gas to be filled, the pressure of the hydrogen gas remaining in the fuel tank of the FC mobility 50, and the like, and then filling is performed. The target value may have a range or may be set to about 90% of the capacity (theoretical value) of the fuel tank.

Therefore, the information indicating the remaining capacity of the fuel tank (the amount of hydrogen that can be supplied to the FC mobility 50) stored in the production plan generation system 10 may be a value from the amount of hydrogen filled into the fuel tank of the FC mobility 50 at the present time to the target value (a difference value between these values). When the amount of hydrogen filled into the fuel tank of the FC Mobility 50 at the present time is equal to or greater than the target value, it is assumed that the remaining capacity of the fuel tank is zero. The target value may be a preset value (for example, 90% of the capacity (theoretical value) of the fuel tank) or may be a value calculated for each FC mobility 50 as described above. In this case, it is assumed that the information indicating whether or not the fuel tank has been filled is based on the remaining capacity.

The FC mobility 50 that has been filled with hydrogen can be leased, and the FC mobility 50 that has not been filled with hydrogen is not capable of being leased. In addition, the information in the database is updated according to the filling of the FC mobility 50 with hydrogen and the leasing of the FC mobility 50, which will be described below.

In this embodiment, the production plan for hydrogen is generated at the timing when the FC mobility 50 enters the waiting area 40, which will be described below. The condition information acquisition unit 11 acquires, as the condition information, information indicating the remaining capacities of the fuel tanks of all of the FC mobilities 50 stored in the database at the timing when the FC mobility 50 enters the waiting area 40 and the information related to the FC mobility 50 in the database is updated. Further, the condition information acquisition unit 11 may also acquire other condition information at the same timing.

In addition, the production plan for hydrogen may be generated at a timing other than the above. The condition information acquisition unit 11 may acquire the condition information at a timing corresponding to the generation.

The production plan generation system 10 stores information indicating the remaining capacity (for example, in Nm3), which is the amount of hydrogen that can be stored in the pressure accumulator 34, in the database or the like. The information is updated according to the storage of hydrogen in the pressure accumulator 34 and the supply of hydrogen from the pressure accumulator 34 to the FC mobility 50, which will be described below. The condition information acquisition unit 11 acquires, as the condition information, information indicating the remaining capacity of the pressure accumulator 34 stored in the database.

The condition information acquisition unit 11 may acquire information indicating the hydrogen production capacity of the hydrogen production facility 31 as the condition information indicating one of the above-described conditions. For example, the information indicating the hydrogen production capacity of the hydrogen production facility 31 is information indicating the amount of hydrogen (for example, in Nm3) that can be produced per unit time (for example, 30 minutes which is the unit time of the production plan for hydrogen). The condition information acquisition unit 11 acquires, for example, the information indicating the hydrogen production capacity of the hydrogen production facility 31 that has been stored in advance in the production plan generation system 10. The condition information acquisition unit 11 may acquire condition information other than the above. The condition information acquisition unit 11 outputs the acquired condition information to the production plan generation unit 12.

The production plan generation unit 12 is a functional unit that sets an upper limit of the amount of fuel produced on the basis of the condition information acquired by the condition information acquisition unit 11 and generates a production plan including a production time of the fuel and an amount of fuel produced. The production plan generation unit 12 may acquire information indicating a production cost of the fuel for each time and generate the production plan also on the basis of the production cost. The production cost of hydrogen, which is the fuel, may include a power price. The production plan generation unit 12 may generate the production plan also on the basis of the information indicating the fuel production capacity of the production device acquired by the condition information acquisition unit 11. For example, the production plan generation unit 12 generates the production plan for hydrogen which is the fuel as described below.

The production plan for hydrogen generated by the production plan generation unit 12 is, for example, a production plan after a point of time when the production plan is generated on the day when the production plan is generated, that is, a production plan for one day. Alternatively, the production plan for hydrogen to be produced may be a production plan for a predetermined time period after the point of time when the production plan is generated.

The production plan generation unit 12 inputs the condition information from the condition information acquisition unit 11. When commercial power is used to produce hydrogen, the production plan generation unit 12 acquires information of the power price for each time as the information indicating the production cost of hydrogen. The power price is a power price at the time when hydrogen is produced according to the production plan, that is, a future power price. The power price is, for example, a price per unit power and is a price per 30 minutes which is the unit time of the production plan for hydrogen as shown in FIG. 2. However, the information of the power price may be information other than the above. For example, the production plan generation unit 12 may acquire information of the power price provided by a power company that supplies commercial power. Alternatively, the production plan generation unit 12 may acquire information of the power price predicted from the past power prices. In addition, the production plan generation unit 12 may acquire the information of the power price using other methods.

The production plan generation unit 12 generates the production plan for hydrogen on the basis of the input condition information and the acquired information of the power price. For example, the production plan generation unit 12 generates the production plan for hydrogen using mathematical programming such as linear programming. Specifically, the production plan generation unit 12 stores in advance a mathematical model for generating the production plan for hydrogen. A decision variable of the mathematical model is the amount of hydrogen produced for each time.

The constraints of the mathematical model include the upper limit of the amount of hydrogen produced. Specifically, there is a constraint that the total amount of hydrogen produced is equal to or less than the sum of the remaining capacities of the fuel tanks of the FC mobilities 50 and the remaining capacity of the pressure accumulator 34 indicated by the condition information. In addition, when this constraint is defined in the mathematical model, the unit of the remaining capacity of the fuel tank of the FC mobility 50 and the unit of the remaining capacity of the pressure accumulator 34 coincide with any unit. Further, the constraints of the mathematical model include a constraint that the amount of hydrogen produced for each time (unit time) is equal to or less than the amount of hydrogen that can be produced, which is indicated by the condition information. Furthermore, the constraints of the mathematical model may include constraints other than the above. An objective function of the mathematical model is the production cost of hydrogen corresponding to the amount of hydrogen produced. The power price indicated by the acquired information is a parameter in the objective function.

The production plan generation unit 12 calculates (generates) the production plan for hydrogen that is an optimal solution of the mathematical model so as to minimize the objective function, that is, the production cost of hydrogen. The calculation using the mathematical model can be performed using a mathematical programming method according to the related art.

According to the above-described production plan, the hydrogen production facility 31 can be operated at maximum capacity during the time period when the power price is low to produce hydrogen. For example, the production plan can be set such that the hydrogen production facility is operated at 100% from 10:00 to 11:00 and is stopped from 11:00 to 12:00.

In addition, the production plan generation unit 12 may generate the production plan for hydrogen using a method other than the above as long as the method sets the upper limit of the amount of hydrogen produced on the basis of the condition information and generates the production plan for hydrogen. For example, when power other than commercial power is used to produce hydrogen, information of the cost corresponding to the power may be used. Further, the generation of the production plan for hydrogen by the production plan generation unit 12 may be performed by a method other than the above, without setting the upper limit of the amount of hydrogen produced, as long as the generation is performed on the basis of the condition information.

The production plan generation unit 12 outputs information indicating the generated production plan for hydrogen. For example, the production plan generation unit 12 may transmit the information to another device or may display the information on a display device included in the production plan generation system 10. In addition, the production plan generation unit 12 may output the information to the vehicle management unit 13.

The generation of the production plan for hydrogen by the production plan generation unit 12 is performed at the timing when the condition information acquisition unit 11 acquires the condition information, that is, at the timing when the FC mobility 50 enters the waiting area 40. This timing is the time when the constraint conditions in the production of hydrogen change from the previous conditions. When the constraint conditions in the production of hydrogen change from the previous conditions at a timing other than the above-described timing, the production plan generation unit 12 may generate a new production plan for hydrogen in which the change in the conditions at that timing has been reflected.

Furthermore, when it is necessary to regenerate the production plan due to the circumstances surrounding the leasing of the FC mobility 50, the production plan generation unit 12 generates the production plan for hydrogen, which will be described below. In this case, constraints corresponding to the above circumstances are added to the mathematical model used to generate the production plan for hydrogen.

The vehicle management unit 13 is a functional unit that manages an available state of the vehicle according to a supply of the fuel generated on the basis of the production plan generated by the production plan generation unit 12 to the vehicle. The vehicle management unit 13 may determine whether or not there is an available vehicle on the basis of a remaining capacity of the fuel tank of the vehicle according to the supply of the fuel generated on the basis of the production plan generated by the production plan generation unit 12 to the vehicle. When the vehicle management unit 13 determines that there is no available vehicle and the storage amount of generated fuel does not satisfy a condition related to the supply of the fuel to the vehicle used by a predetermined user, the vehicle management unit 13 may add a new constraint related to the supply of the fuel to the vehicle used by the predetermined user and instruct the production plan generation unit 12 to generate a new production plan. For example, the vehicle management unit 13 performs the following management.

In the hydrogen production facility 31 of the hydrogen station 30, hydrogen is produced according to the production plan generated by the production plan generation unit 12. When the production plan generation unit 12 generates a new production plan for the time when the production plan has already been generated by the production plan generation unit 12, hydrogen is generated according to the new production plan. That is, the production plan is always updated to the latest production plan.

The hydrogen produced by the hydrogen production facility 31 is pressurized by the compressor 33 and then stored in the pressure accumulator 34. When the hydrogen is stored in the pressure accumulator 34 and there is an FC mobility 50 that has not yet been filled (has not been fully filled) with hydrogen among the FC mobilities 50 parked in the waiting area 40, the FC mobility 50 is filled with hydrogen from the pressure accumulator 34. When there are a plurality of FC mobilities 50 to be filled with hydrogen, the FC mobilities 50 are filled with hydrogen in a predetermined order. For example, the FC mobilities 50 are filled with hydrogen in chronological order of the time when the FC mobilities 50 entered the waiting area 40. Alternatively, the FC mobility 50 having a small remaining capacity of the fuel tank, that is, the FC mobility 50 that requires less time to fill the fuel tank with hydrogen may be preferentially filled with hydrogen. Alternatively, when there is no FC mobility 50 of a vehicle type that has already been filled with hydrogen in the waiting area 40, the FC mobility 50 of the vehicle type may be preferentially filled with hydrogen.

When the FC mobility 50 is filled with hydrogen, the vehicle management unit 13 acquires the vehicle number of the FC mobility 50 and information indicating the amount of hydrogen filled. This acquisition is performed, for example, by receiving information transmitted from the FC mobility 50, the hydrogen station 30, or a terminal of the operator. The vehicle management unit 13 updates the database of the information related to the FC mobility 50, which is provided in the production plan generation system 10, on the basis of the received information. Specifically, the remaining capacity of the fuel tank of the FC mobility 50 with the received vehicle number is reduced by the amount of hydrogen filled indicated by the received information. When the remaining capacity of the fuel tank is zero, the vehicle management unit 13 changes the FC mobility 50 with the vehicle number in the database to a state in which the fuel tank has been (fully) filled with hydrogen, that is, the FC mobility 50 can be leased.

In addition, the vehicle management unit 13 acquires information indicating the amount of hydrogen that has been produced by the hydrogen production facility 31 and stored in the pressure accumulator 34 and updates the remaining capacity, which is the amount of hydrogen that can be stored in the pressure accumulator 34, in the database included in the production plan generation system 10.

When a request to lease FC mobility 50 is issued, the vehicle management unit 13 receives information indicating the request, reads the vehicle number of the FC mobility 50 that can be leased, that is, the FC mobility 50 whose fuel tank has been (fully) filled with hydrogen from the database, and outputs the vehicle number. With the output of the information, the FC mobility 50 is leased to the user. When the FC mobility 50 has been leased, the vehicle management unit 13 receives information indicating that the FC mobility 50 has been leased and deletes the information of the leased FC mobility 50 from the database. In addition, the input and output of the information of the production plan generation system 10 are performed, for example, between the system and the terminal of the operator (the same applies below).

In addition, when the user brings the FC mobility 50 into the waiting area 40 and switches to another FC mobility 50 that is the same vehicle type and has been filled with hydrogen, the vehicle management unit 13 determines whether there is an FC mobility 50 that is the same vehicle type as the entered FC mobility 50 and can be leased with reference to the database. When determining that there is an FC mobility 50 that can be leased, the vehicle management unit 13 reads the vehicle number of the FC mobility 50 from the database and outputs the vehicle number. For example, the vehicle management unit 13 transmits the vehicle number of the FC mobility 50 that can be leased (the FC mobility 50 to which the user can switch) to the system of the entered FC mobility 50 (the FC mobility 50 before switching) to notify the user of the vehicle number. With the output of the information, the FC mobility 50 is leased to the user. As described above, the user can switch to another FC mobility 50 that has been filled with hydrogen.

When the vehicle management unit 13 determines that there is no FC mobility 50 that can be leased, that is, when another FC mobility 50 of the same vehicle type that has been filled with hydrogen is not present in the waiting area 40 at the time when the user brings the FC mobility 50 into the waiting area 40 and the user continues to lease the FC mobility 50, the FC mobility 50 that has previously been leased to the user is filled with hydrogen and continues to be leased.

The vehicle management unit 13 determines whether or not enough hydrogen to fully fill the FC mobility 50 is stored in the pressure accumulator 34 at that time with reference to the database included in the production plan generation system 10. When the vehicle management unit 13 determines that enough hydrogen to fully fill the FC mobility 50 is stored in the pressure accumulator 34 at that time, the vehicle management unit 13 outputs information indicating that the FC mobility 50 is to be filled with the hydrogen stored in the pressure accumulator 34. With the output of the information, the FC mobility 50 is filled with hydrogen from the pressure accumulator 34, and the user continues to lease the FC mobility 50.

When the vehicle management unit 13 determines that enough hydrogen to fully fill the FC mobility 50 is not stored in the pressure accumulator 34 at that time, the vehicle management unit 13 instructs the production plan generation unit 12 to generate a new production plan for hydrogen. The generated production plan for hydrogen is a production plan for hydrogen that enables the production of hydrogen enough to fully fill the FC mobility 50 at the highest speed. Specifically, the production plan generation unit 12 adds a constraint that the amount of hydrogen corresponding to the remaining capacity of the FC mobility 50 is produced with the hydrogen production capacity of the hydrogen production facility 31 at the earliest possible time among the times covered by the production plan to the above-described constraints to generate a production plan in the same manner as described above. When the amount of hydrogen corresponding to the remaining capacity of the FC mobility 50 is produced according to this production plan, the FC mobility 50 is filled with hydrogen from the pressure accumulator 34, and the user continues to lease the FC mobility 50.

The vehicle management unit 13 may input information indicating the production plan for hydrogen from the production plan generation unit 12. According to the production plan for hydrogen, it is possible to ascertain how much hydrogen will be produced at what time. The vehicle management unit 13 may calculate the time when each FC mobility 50 parked in the waiting area 40 is filled with hydrogen on the basis of the amount of hydrogen produced corresponding to the production time based on the production plan in accordance with the above-mentioned predetermined criteria for filling the FC mobility 50 with hydrogen.

The vehicle management unit 13 outputs information indicating the scheduled time when each FC mobility 50 is filled with hydrogen such that each FC mobility 50 can be filled with hydrogen at the calculated time. For example, the vehicle management unit 13 transmits information indicating the time for each FC mobility 50 (for example, information that vehicle A is scheduled to be filled with hydrogen at 10:30) to the terminal of the operator. The operator fills the FC mobility 50 with hydrogen according to the information and transmits information indicating the result (for example, information that the filling of the vehicle A with hydrogen has been completed at 10:40) to the production plan generation system 10. The vehicle management unit 13 receives the information and updates the database as described above. The functions of the production plan generation system 10 according to this embodiment have been described above.

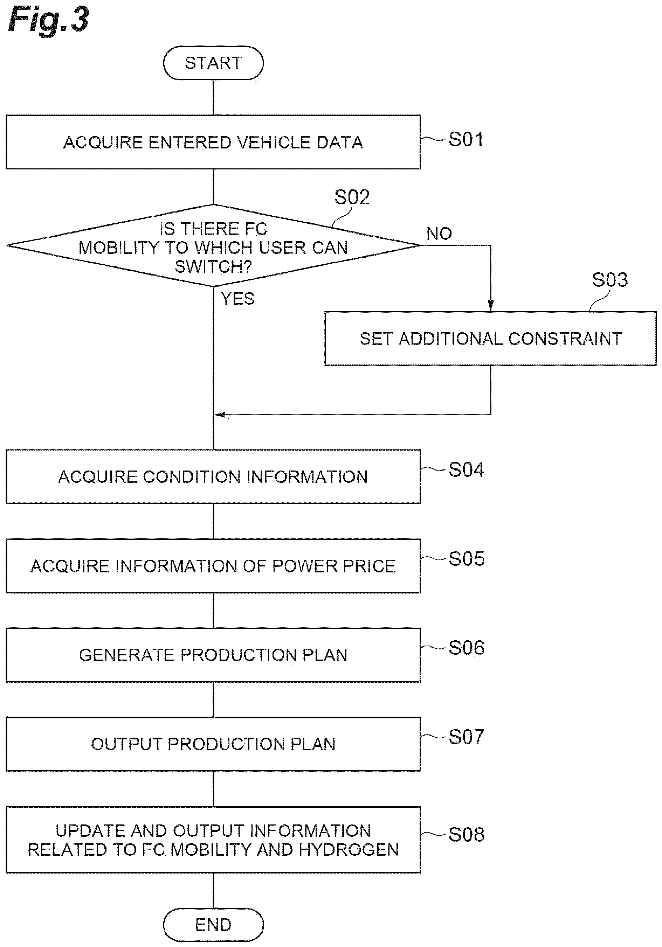

Next, a production plan generation method, which is a process executed by the production plan generation system 10 according to this embodiment (an operation method performed by the production plan generation system 10), will be described with reference to a flowchart shown in FIG. 3. This process is a process in a case where the user leases the FC mobility 50 for use, brings the FC mobility 50 that has run low on hydrogen, which is fuel, into the waiting area 40, and continues to lease the FC mobility 50.

When the FC mobility 50 enters the waiting area 40, the production plan generation system 10 receives entered vehicle data, which is the vehicle number and the information indicating the remaining capacity of the fuel tank, transmitted from the FC mobility 50 and stores the entered vehicle data in the database (S01). Then, the vehicle management unit 13 determines whether or not there is an FC mobility 50 that is the same vehicle type as the entered FC mobility 50 and can be leased with reference to the database (S02, a vehicle management step).

When there is an FC mobility 50 that can be leased (YES in S02), the vehicle management unit 13 outputs the vehicle number of the FC mobility 50 that can be leased (FC mobility 50 to which the user can switch), and the user switches to the FC mobility 50. When there is no FC mobility 50 that can be leased (NO in S02), the FC mobility 50, which the user has previously leased, is filled with hydrogen and the user continues to lease the FC mobility 50. When the pressure accumulator 34 stores enough hydrogen to fully fill the FC mobility 50, the FC mobility 50 is filled with hydrogen from the pressure accumulator 34, and the user continues to lease the FC mobility 50.

When enough hydrogen to fully fill the FC mobility 50 is not stored in the pressure accumulator 34, the hydrogen production facility 31 produces hydrogen according to the production plan generated by the production plan generation system 10, the FC mobility 50 is filled with hydrogen from the pressure accumulator 34, and the user continues to lease the FC mobility 50. In this case, the vehicle management unit 13 sets an additional production condition (constraint) for generating the production plan for hydrogen (S03, a vehicle management step). The additional production condition is a constraint that the amount of hydrogen corresponding to the remaining capacity of the FC mobility 50 is produced with the hydrogen production capacity of the hydrogen production facility 31 at the earliest possible time among the times covered by the production plan.

After YES in S02 or after S03, the condition information acquisition unit 11 acquires the condition information (S04, a condition information acquisition step). Then, the production plan generation unit 12 acquires the information of the power price for each time as the information indicating the production cost of hydrogen (S05, a production plan generation step). Then, the production plan generation unit 12 generates a production plan for hydrogen (S06, a production plan generation step). For the generation of the production plan for hydrogen, the upper limit of the amount of hydrogen produced is set on the basis of the condition information, and the generation is performed. In addition, the production plan for hydrogen is generated considering the information of the power price for each time.

Then, the production plan generation unit 12 outputs the generated production plan for hydrogen (S07). The hydrogen production facility 31 of the hydrogen station 30 produces hydrogen according to the output production plan for hydrogen. The FC mobility 50 is filled with the produced hydrogen.

In addition, the vehicle management unit 13 performs the output of the information related to the FC mobility 50 and hydrogen and the update of the database according to the output of the production plan for hydrogen, the production of hydrogen, and the filling of the FC mobility 50 with hydrogen as described above (S08, a vehicle management step). For example, with the supply of the hydrogen generated on the basis of the production plan for hydrogen to the FC mobility 50, the vehicle management unit 13 performs management such as the update of the available state of the FC mobility 50. The process executed by the production plan generation system 10 according to this embodiment has been described above.

In this embodiment, the upper limit of the amount of hydrogen produced is set on the basis of the condition information including the information indicating the remaining capacity of the fuel tank of the FC mobility 50 which is the amount of hydrogen that can be supplied to the FC mobility 50, and the production plan is generated. Therefore, the production plan can be generated considering the supply of hydrogen to the FC mobility 50. As a result, it is possible to reduce the production cost of the hydrogen provided to the FC mobility 50.

For example, the constraints are relaxed as compared to a case according to the related art where the amount of hydrogen to fill the FC mobility is produced at the timing when the FC mobility arrives at the hydrogen station. Therefore, it is possible to reduce the production cost. Specifically, in the case of the related art, hydrogen needs to be produced at an irregular timing, which makes it impossible to control the production of hydrogen. However, in this embodiment, it is possible to control the production of hydrogen such that hydrogen is produced and stored during the time period for which the power price is low.

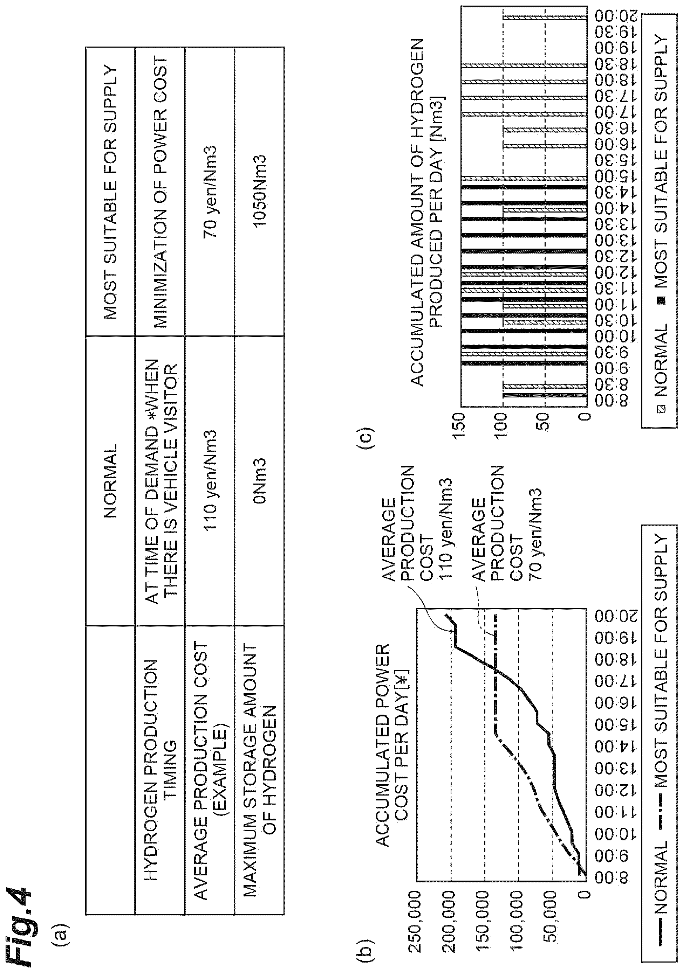

FIG. 4 shows a comparison between the above-described case (normal) and the case according to this embodiment (most suitable for supply). FIG. 4 shows an example of the case of the power price and hydrogen demand shown in FIG. 2. The hydrogen demand shown in FIG. 2 indicates the time when the FC mobility to which hydrogen is to be supplied occurs and the amount of hydrogen that can be supplied (needs to be supplied). The hydrogen demand figures shown in FIG. 2 are figures (Nm3) shown on the right side of a graph. Further, in the example shown in FIG. 4, the pressure accumulator 34 is not used in neither the normal case nor the case most suitable for supply.

FIG. 4(a) is a table showing a hydrogen production timing, an average production cost, and a maximum hydrogen storage amount for the normal case and the case most suitable for supply. FIG. 4(b) is a graph showing the accumulated power price for each time in each case. FIG. 4(c) is a graph showing the amount of hydrogen produced for each time. As shown in FIG. 4(c), in the case most suitable for supply, hydrogen is not produced after 15:00 which is a time period when the power price is high. Therefore, in this embodiment, it is possible to reduce the production cost of hydrogen as compared to the related art. In addition, when a fuel storage device, such as a pressure accumulator, is provided, the constraints are relaxed as compared to the normal case (when the produced hydrogen is not stored). When the amount of hydrogen that can be supplied to the FC mobility 50 is not considered unlike this embodiment, it is not possible to achieve the reduction in the production cost of hydrogen.

Further, as in this embodiment, the upper limit of the amount of fuel produced may be set on the basis of the condition information, and the production plan may be generated. According to this configuration, it is possible to more appropriately and reliably reduce the production cost of the fuel provided to the FC mobility 50. However, the production plan may be generated by a method other than the above-described method, without setting the upper limit of the amount of hydrogen produced, as long as the production plan is generated on the basis of the condition information.

Furthermore, as in this embodiment, the condition information also including information indicating the amount of hydrogen that can be stored in a storage device which is other than the FC mobility 50 and can store the produced fuel, for example, the pressure accumulator 34 according to this embodiment may be used. According to this configuration, the production plan can be generated considering the storage of fuel in the storage device, in addition to the supply of fuel to FC mobility 50. As a result, it is possible to further reduce the production cost of the fuel provided to the FC mobility 50. However, the condition information related to the storage device is not necessarily used. In addition, the storage device may be any device other than the pressure accumulator 34 as long as it can store the produced fuel.

Further, as in this embodiment, information indicating the power price, which is the production cost of hydrogen, for each time may be acquired, and the production plan may be generated also on the basis of the information. In addition, the produced fuel may be hydrogen, and the production cost of the fuel may be the power price. According to this configuration, it is possible to appropriately and reliably generate a production plan for reducing the production cost of hydrogen. However, the information indicating the production cost may not be used. In addition, information indicating the production cost of fuel other than the power price may be used. Furthermore, the fuel for the vehicle may be fuel other than hydrogen, and the vehicle may be something other than the FC mobility.

In addition, like the vehicle management unit 13 according to this embodiment, the available state of the FC mobility 50 may be managed according to the supply of the hydrogen generated on the basis of the generated production plan to the FC mobility 50. According to this configuration, in the leasing of the FC mobility 50 as in this embodiment, the FC mobility 50 can be appropriately managed according to the generated production plan. However, the available state of the FC mobility 50 is not necessarily managed.

Furthermore, like the vehicle management unit 13 according to this embodiment, it may be determined whether or not there is an available FC mobility 50 on the basis of the remaining capacity of the fuel tank of the FC mobility 50 according to the supply of the fuel produced on the basis of the production plan to the FC mobility 50. According to this configuration, it is possible to more appropriately manage the FC mobility 50.

Further, like the vehicle management unit 13 according to this embodiment, when it is determined that there is no available FC mobility 50 and the storage amount of fuel generated does not satisfy the condition related to the supply of the fuel to the FC mobility 50 used by a predetermined user, a new constraint related to the supply of the fuel to the FC mobility 50 used by the predetermined user may be added, and an instruction to generate a new production plan may be issued. According to this configuration, it is possible to generate an appropriate production plan also corresponding to the available state of the FC mobility 50. However, the production plan generation system 10 does not necessarily have the functions of the vehicle management unit 13.

In addition, as in this embodiment, when the FC mobility 50 enters a pre-set parking place, information that indicates the remaining capacity of the fuel tank of the FC mobility 50 and is transmitted from the FC mobility 50 may be acquired as the information indicating the amount of fuel that can be supplied to the FC mobility 50. According to this configuration, it is possible to appropriately and reliably acquire information used for generating the production plan. As a result, it is possible to more appropriately and reliably reduce the production cost of the fuel provided to the FC mobility 50. However, the information indicating the amount of fuel that can be supplied to the FC mobility 50 may be acquired by a method other than the above.

Further, as in this embodiment, information indicating the fuel production capacity of the hydrogen production facility 31 that produces fuel for the FC mobility 50 may be acquired, and the production plan may be generated also on the basis of the information indicating the fuel production capacity of the hydrogen production facility 31. According to this configuration, it is possible to generate an appropriate production plan corresponding to the fuel production capacity of the hydrogen production facility 31. However, in the generation of the production plan, the information indicating the fuel production capacity of the hydrogen production facility 31 may not be necessarily used.

In addition, as in this embodiment, the FC mobility 50 may be leased. According to this configuration, it is possible to more appropriately and reliably reduce the production cost of the fuel provided to the leased FC mobility 50. However, the target FC mobility 50 may not be necessarily leased and may be any type. That is, in this embodiment, it is premised that the FC mobility 50 is leased. However, an embodiment of the present invention is not necessarily implemented on this premise, and any configuration may be adopted as long as it generates the production plan for fuel considering the amount of fuel that can be supplied to the vehicle to which the produced fuel can be supplied.

The production plan generation system, the production plan generation method, and the production system according to the present disclosure have the following configurations.
[1] A production plan generation system for generating a production plan for fuel for a vehicle, the production plan generation system including:
   a condition information acquisition unit acquiring condition information including information indicating an amount of fuel suppliable to a vehicle to which a produced fuel can be supplied; and
   a production plan generation unit generating the production plan including a production time of the fuel and an amount of fuel produced on the basis of the condition information acquired by the condition information acquisition unit.
[2] The production plan generation system according to [1],
   in which the production plan generation unit sets an upper limit of the amount of fuel produced on the basis of the condition information acquired by the condition information acquisition unit and generates the production plan.
[3] The production plan generation system according to [1] or [2],
   in which the condition information acquisition unit acquires the condition information including information indicating an amount of fuel storable in a storage device that is other than the vehicle and can store the produced fuel.
[4] The production plan generation system according to any one of [1] to [3],
   in which the production plan generation unit acquires information indicating a production cost of the fuel for each time and generates the production plan also on the basis of the production cost.
[5] The production plan generation system according to [4],
   in which the produced fuel is hydrogen, and
   the production cost of the fuel includes a power price.
[6] The production plan generation system according to any one of [1] to [5], further comprising:
   a vehicle management unit managing an available state of the vehicle according to a supply of the fuel generated on the basis of the production plan generated by the production plan generation unit to the vehicle.
[7] The production plan generation system according to [6],
   in which the vehicle management unit determines whether or not there is an available vehicle on the basis of a remaining capacity of a fuel tank of the vehicle corresponding to the supply of the fuel generated on the basis of the production plan generated by the production plan generation unit to the vehicle.
[8] The production plan generation system according to [7],
   in which, when it is determined that there is no available vehicle and a storage amount of the generated fuel does not satisfy a condition related to the supply of the fuel to a vehicle used by a predetermined user, the vehicle management unit adds a new constraint related to the supply of the fuel to the vehicle used by the predetermined user and instructs the production plan generation unit to generate a new production plan.
[9] The production plan generation system according to any one of [1] to [8],
   in which the vehicle is a leased vehicle.
[10] The production plan generation system according to any one of [1] to [9],
   in which the condition information acquisition unit acquires information, which indicates a remaining capacity of the fuel tank of the vehicle and is transmitted from the vehicle when the vehicle enters a predetermined parking place, as the information indicating the amount of fuel suppliable to the vehicle.
[11] The production plan generation system according to any one of [1] to [10],
   in which the condition information acquisition unit acquires information indicating a fuel production capacity of a production device producing the fuel for the vehicle, and
   the production plan generation unit generates the production plan also on the basis of the information indicating the fuel production capacity of the production device acquired by the condition information acquisition unit.
[12] A production plan generation method which is a method for operating a production plan generation system generating a production plan for fuel for a vehicle, the production plan generation method including:
   a condition information acquisition step of acquiring condition information including information indicating an amount of fuel suppliable to a vehicle to which a produced fuel can be supplied; and
   a production plan generation step of generating the production plan including a production time of the fuel and an amount of fuel produced on the basis of the condition information acquired in the condition information acquisition step.
[13] A production system including:
   a production plan generation system; and
   a production device producing fuel according to a production plan generated by the production plan generation system,
   in which the production plan generation system generates the production plan for fuel for a vehicle and includes
   a condition information acquisition unit acquiring condition information including information indicating an amount of fuel suppliable to a vehicle to which a produced fuel can be supplied; and
   a production plan generation unit generating the production plan including a production time of the fuel and an amount of fuel produced on the basis of the condition information acquired by the condition information acquisition unit.

The production plan generation system according to the present disclosure has the following configurations.
[1] A production plan generation system for generating a production plan for fuel for a vehicle, the production plan generation system including:
   a condition information acquisition unit acquiring condition information including information indicating an amount of fuel suppliable to a vehicle to which a produced fuel can be supplied; and
   a production plan generation unit that sets an upper limit of an amount of fuel produced on the basis of the condition information acquired by the condition information acquisition unit and generates the production plan including a production time of the fuel and the amount of fuel produced.
[2] The production plan generation system according to [1],
   in which the condition information acquisition unit acquires the condition information including information indicating an amount of fuel storable in a storage device that is other than the vehicle and can store the produced fuel.
[3] The production plan generation system according to [1] or [2],
   in which the production plan generation unit acquires information indicating a production cost of the fuel for each time and generates the production plan also on the basis of the production cost.
[4] The production plan generation system according to [3],
   in which the produced fuel is hydrogen, and
   the production cost of the fuel is a power price.
[5] The production plan generation system according to any one of [1] to [4], further including:
   a vehicle management unit managing an available state of the vehicle according to a supply of the fuel generated on the basis of the production plan generated by the production plan generation unit to the vehicle.

### Reference Signs List

10: production plan generation system, 11: condition information acquisition unit, 12: production plan generation unit, 13: vehicle management unit, 20: facility, 30: hydrogen station, 31: hydrogen production facility, 32: hydrogen supply equipment, 33: compressor, 34: pressure accumulator, 35: dispenser, 40: waiting area, 50: FC mobility, 100: production system.

## Claims

1. A production plan generation system for generating a production plan for fuel for a vehicle, the production plan generation system comprising:
a condition information acquisition unit acquiring condition information including information indicating an amount of fuel suppliable to a vehicle to which a produced fuel can be supplied; and
a production plan generation unit generating the production plan including a production time of the fuel and an amount of fuel produced on the basis of the condition information acquired by the condition information acquisition unit.

2. The production plan generation system according to claim 1 ,
wherein the production plan generation unit sets an upper limit of the amount of fuel produced on the basis of the condition information acquired by the condition information acquisition unit and generates the production plan.

3. The production plan generation system according to claim 1 or 2,
wherein the condition information acquisition unit acquires the condition information including information indicating an amount of fuel storable in a storage device that is other than the vehicle and can store the produced fuel.

4. The production plan generation system according to claim 1 or 2,
wherein the production plan generation unit acquires information indicating a production cost of the fuel for each time and generates the production plan also on the basis of the production cost.

5. The production plan generation system according to claim 4,
wherein the produced fuel is hydrogen, and
the production cost of the fuel includes a power price.

6. The production plan generation system according to claim 1 or 2, further comprising:
a vehicle management unit managing an available state of the vehicle according to a supply of the fuel generated on the basis of the production plan generated by the production plan generation unit to the vehicle.

7. The production plan generation system according to claim 6,
wherein the vehicle management unit determines whether or not there is an available vehicle on the basis of a remaining capacity of a fuel tank of the vehicle corresponding to the supply of the fuel generated on the basis of the production plan generated by the production plan generation unit to the vehicle.

8. The production plan generation system according to claim 7,
wherein, when it is determined that there is no available vehicle and a storage amount of the generated fuel does not satisfy a condition related to the supply of the fuel to a vehicle used by a predetermined user, the vehicle management unit adds a new constraint related to the supply of the fuel to the vehicle used by the predetermined user and instructs the production plan generation unit to generate a new production plan.

9. The production plan generation system according to claim 1 or 2,
wherein the vehicle is a leased vehicle.

10. The production plan generation system according to claim 1 or 2,
wherein the condition information acquisition unit acquires information, which indicates a remaining capacity of a fuel tank of the vehicle and is transmitted from the vehicle when the vehicle enters a predetermined parking place, as the information indicating the amount of fuel suppliable to the vehicle.

11. The production plan generation system according to claim 1 or 2,
wherein the condition information acquisition unit acquires information indicating a fuel production capacity of a production device producing the fuel for the vehicle, and
the production plan generation unit generates the production plan also on the basis of the information indicating the fuel production capacity of the production device acquired by the condition information acquisition unit.

12. A production plan generation method which is a method for operating a production plan generation system generating a production plan for fuel for a vehicle, the production plan generation method comprising:
a condition information acquisition step of acquiring condition information including information indicating an amount of fuel suppliable to a vehicle to which a produced fuel can be supplied; and
a production plan generation step of generating the production plan including a production time of the fuel and an amount of fuel produced on the basis of the condition information acquired in the condition information acquisition step.

13. A production system comprising:
a production plan generation system; and
a production device producing fuel according to a production plan generated by the production plan generation system,
wherein the production plan generation system generates the production plan for fuel for a vehicle and includes:
a condition information acquisition unit acquiring condition information including information indicating an amount of fuel suppliable to a vehicle to which a produced fuel can be supplied; and
a production plan generation unit generating the production plan including a production time of the fuel and an amount of fuel produced on the basis of the condition information acquired by the condition information acquisition unit.
